Europäisches Patentamt

European Patent Office

Office européen des brevets

(11) Veröffentlichungsnummer: **0 229 307 B1**

# EUROPÄISCHE PATENTSCHRIFT

(45) Veröffentlichungstag der Patentschrift: **29.05.91**

(51) Int. Cl.⁵: **G01B 11/00**

(21) Anmeldenummer: **86117066.0**

(22) Anmeldetag: **08.12.86**

(54) **Einrichtung zur Auswertung der Lage und Intensität eines Lichtflecks.**

(30) Priorität: **09.12.85 DE 3543782**

(43) Veröffentlichungstag der Anmeldung:
**22.07.87 Patentblatt 87/30**

(45) Bekanntmachung des Hinweises auf die
Patenterteilung:
**29.05.91 Patentblatt 91/22**

(84) Benannte Vertragsstaaten:
**AT BE CH DE ES FR GB GR IT LI LU NL SE**

(56) Entgegenhaltungen:
**EP-A- 115 025**
**US-A- 3 940 608**
**US-A- 4 479 717**

(73) Patentinhaber: **Siemens Aktiengesellschaft**
**Wittelsbacherplatz 2**
**W-8000 München 2(DE)**

(72) Erfinder: **Marguerre, Hans-Helmut, Dipl.-Phys.**
**Mähfeldstrasse 23**
**W-7541 Straubenhardt 4(DE)**

## Beschreibung

Die Erfindung betrifft eine Einrichtung zur Auswertung der Lage und Intensität eines Lichtflecks gemäß den Merkmalen des Oberbegriffs des Anspruchs 1.

Eine derartige Einrichtung ist aus der Zeitschrift "Technisches Messen", 1979, Heft 6, Seiten 249 bis 254 bekannt. Sie ist Bestandteil eines Wegaufnehmers, bei dem die Bewegung einer Blende zu einer Veränderung des Ortes eines Lichtflecks auf einem Lichtsensor der bekannten Einrichtung führt. Der Lichtsensor enthält zwei nebeneinanderliegende Fotoelemente in Form von Fotodioden, deren lichtempfindliche Flächen der Blende zugewandt sind. Die elektrischen Anschlüsse der beiden Fotoelemente sind mit einer elektrischen Auswerteeinrichtung verbunden, die eine Spannungsquelle enthält, von der über die beiden Fotodioden elektrische Ströme fließen. Weiterhin enthält die elektrische Auswerteeinrichtung Widerstände, an denen die über die Fotodioden fließenden Ströme Spannungsabfälle hervorrufen. Diese Spannungsabfälle werden in Vorverstärkern verstärkt und in einem Differenzverstärker addiert. Das Signal am Ausgang des Differenzverstärkers ist ein Maß für die Verschiebung der beweglichen Blende und somit auch ein Maß für den Ort des Lichtflecks, der auf die lichtempfindlichen Flächen der beiden Fotodioden abgebildet ist. Ist der Lichtfleck gleichmäßig auf die beiden lichtempfindlichen Flächen der Fotodioden verteilt, so sind die beiden elektrischen Ströme der Fotodioden gleich groß, und am Differenzverstärker tritt kein Signal auf. Der Lichtfleck befindet sich dann in seiner Mittenlage. Ist der Lichtfleck ungleichmäßig auf die beiden lichtempfindlichen Flächen verteilt, ändern sich die Ströme, und am Differenzverstärker tritt ein entsprechend geändertes elektrisches Signal auf.

Der Erfindung liegt die Aufgabe zugrunde, eine Einrichtung zu schaffen, die allein durch die Auswertung der Lage und Intensität eines in einer Meßanordnung anfallenden Lichtfleckes eine einfache Lagebestimmung von Prüfobjekten möglich macht.

Zur Lösung dieser Aufgabe weist bei einer Einrichtung der eingangs genannten Art erfindungsgemäß der Lichtsensor die im Kennzeichen des Anspruchs 1 angegebenen Merkmale auf.

Dabei ist unter einem Fluoreszenzlichtleiter ein Lichtleiter zu verstehen, der fluoreszierende Substanzen enthält, wie er aus der Zeitschrift "Applied Optics", 1981, Ausgabe 20, Nr. 4, Seite 701 bekannt ist. Auf den Fluoreszenzlichtleiter auftreffendes Licht regt die fluoreszierenden Substanzen in dem Fluoreszenzlichtleiter zur Fluoreszenz an. Das Fluoreszenzlicht gelangt durch Totalreflexion innerhalb des Fluoreszenzlichtleiters zu seinen Stirnseiten.

Die erfindungsgemäße Einrichtung kann mit Vorzug bei Meßaufgaben eingesetzt werden, bei denen der Lichtsensor in explosionsgefährdeten Gebieten oder in Gebieten mit starken elektrischen und magnetischen Störfeldern liegt, da der Lichtsensor ohne elektrische Speisung auskommt und das von ihm erzeugte Signal als optisches Signal durch die Störfelder zur gegebenenfalls räumlich weit entfernten Auswerteeinrichtung übertragen wird. Die Anschlüsse der Fotoelemente liegen dann außerhalb des explosionsgefährdeten Gebietes oder des Gebietes mit starken elektrischen und magnetischen Störfeldern, so daß die Meßsignale unverfälscht übertragen werden bzw. keine Gefahr der Zündung von explosionsfähigen Gasen besteht.

Vorteilhafte Ausführungsformen der Fluoreszenzlichtleiter sind in den Unteransprüchen 3 bis 5 angegeben, die Anordnungen mit Fluoreszenzlichtleitern mit gleichen und unterschiedlichen Wellenlängen des Fluoreszenzlichts betreffen. Bei der Verwendung von gleichen Wellenlängen ist eine einfache Auswertung möglich; bei der Verwendung von unterschiedlichen Wellenlängen ist die gegenseitige Beeinflussung vermindert, es sind jedoch Maßnahmen zur optischen Filterung notwendig.

Besonders vorteilhafte Ausführungsformen gemäß der weiteren Unteransprüche erlauben eine Erfassung von Abständen oder Abstandsänderungen nach dem Triangulationsverfahren, das beispielsweise aus "Qualitätstechnik" 30 (1985) Heft 7, Seite 205, Bild 1 bekannt ist. Gemäß der erfindungsgemäßen Ausführungsform ist jedoch eine rotationssymmetrische Auswertung um den reflektierenden Bereich eines Prüfobjekts herum gewährleistet. Dadurch sind Fehler 1. Ordnung, beispielsweise aufgrund eines unsymmetrischen Lichtflecks, durch Oberflächenunregelmäßigkeiten (Rauhigkeit) ausgeschlossen, die bei der bekannten Anordnung zu groben Fehlmessungen führen können. Durch die rotationssymmetrische Anordnung des Lichtsensors gemäß der Erfindung werden solche Fehler ausgemittelt.

Die weiterhin in den Unteransprüchen angegebene optische Führung durch eine Linse und eine Abschattung von reflektierten Lichtbereichen durch Anordnung einer Blende führt zu einer besseren Anpassung der Lichteinfallswinkel in den Lichtsensor an die gegebene Meßanordnung und damit zu einer Optimierung der Meßbereiche.

Die Erfindung wird anhand von in den Figuren dargestellten Ausführungsbeispielen der Erfindung erläutert, wobei

Figur 1    ein erstes Ausführungsbeispiel darstellt,

Figur 2    eine Draufsicht auf die im ersten Ausführungsbeispiel verwendeten Fluoreszenzlichtleiter,

EP 0 229 307 B1

| Figur 3 | eine Detaildarstellung von geänderten Einfallswinkeln und reflektierten Lichtstrahlen in die Fluoreszenzlichtleiter, |
| Figur 4 | ein zweites Ausführungsbeispiel mit einer optischen Linse, |
| Figur 5 | ein drittes Ausführungsbeispiel mit einer optischen Linse und einer Fluoreszenzlichtleiteranordnung mit für das Fluoreszenzlicht optisch getrennten Bereichen, |
| Figur 6 | ein viertes Ausführungsbeispiel mit Fluoreszenzlicht unterschiedlicher Wellenlänge und einer Filtereinrichtung und |
| Figur 7 | ein Ausführungsbeispiel einer Auswerteschaltung für die von Fotoelementen in dem Lichtsensor detektierten Signale zeigt. |

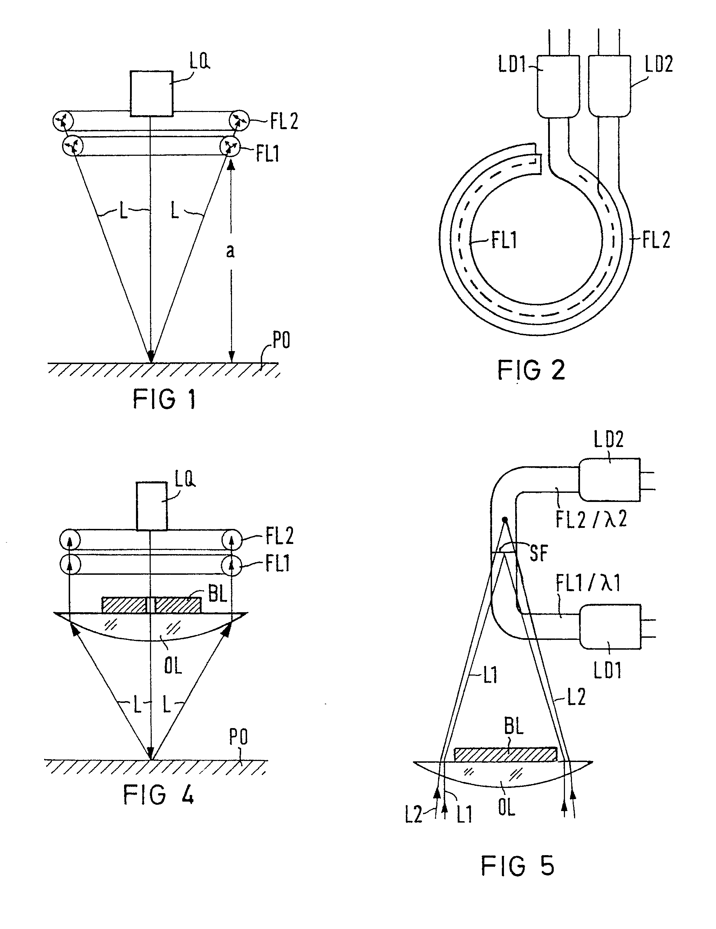

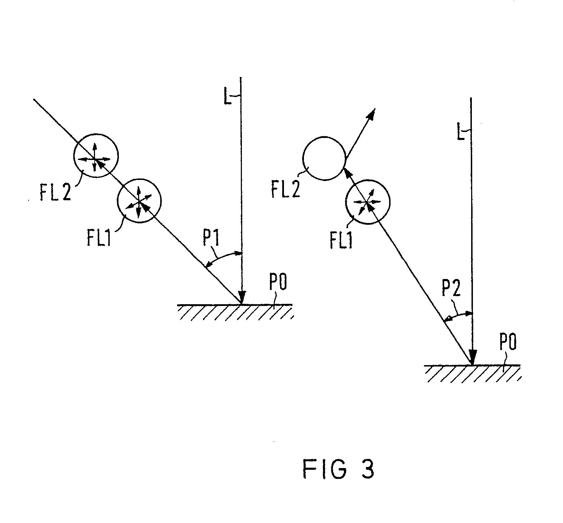

Bei der Einrichtung nach der Figur 1 ist eine Lichtquelle LQ, z. B. ein Laser, vorhanden, die einen Lichtstrahl L auf ein Prüfobjekt PO aussendet, wobei diese Lichtstrahlen L von der Oberfläche des Prüfobjekts PO zumindest teilweise reflektiert werden. In einem Abstand a von der Oberfläche des Prüfobjekts PO ist ein erster Fluoreszenzlichtleiter FL1 und ein zweiter Fluoreszenzlichtleiter FL2 mit etwas größerem Durchmesser rotationssymmetrisch um die Achse des Lichtstrahls L gelegt. Zur Verdeutlichung der Fluoreszenzlichtleiteranordnung FL1 und FL2 ist in der Figur 2 eine Draufsicht auf diese gezeigt, wobei hier außerdem noch die Fotoelemente LD1 und LD2 gezeigt sind, mit denen eine Auswertung des erzeugten Lichtstroms möglich ist.

Der Fluoreszenzlichtleiter 1 setzt bei dem Ausführungsbeispiel nach der Figur 1 einen Teil des diffus reflektierten Lichtes von der Oberfläche des Prüfobjekts PO in Fluoreszenzlicht um, das zum Fotoelement LD1 gelangt. Für das transmittierte Licht L wirkt der Fluoreszenzlichtleiter FL1 als Toruslinse; dieses Licht dringt teilweise in den Fluoreszenzlichtleiter FL2 ein, dessen Fluoreszenzlicht zum Fotoelement LD2 gelangt.

Aus der Detaildarstellung nach der Figur 3 ist zu ersehen, daß der Anteil des eindringenden Lichts mit kleiner werdendem Winkel $\phi$ stark abnimmt. Bei der linken Darstellung, bei der sich die Oberfläche des Prüfobjekts PO näher am Lichtsensor befindet, bewirkt der größere Einfallswinkel $\phi$ 1, daß in beiden Fluoreszenzlichtleitern FL1 und FL2 nahezu gleiche Mengen von Fluoreszenzlicht erzeugt werden. Im rechts dargestellten Fall, bei dem die Oberfläche des Prüfobjekts PO weiter vom Lichtsensor entfernt ist, wird noch eine relativ große Menge Fluoreszenzlicht im Fluoreszenzlichtleiter FL1 erzeugt, beim Fluoreszenzlichtleiter FL2 wird dagegen ein großer Anteil außen reflektiert und nur ein geringerer Anteil gelangt ins Innere zur Erzeugung von Fluoreszenzlicht. Der vom Fotoelement LD2 des Fluoreszenzlichtleiters FL2 detektierte Lichtstrom kann daher mit der Formel

$$I_2 \sim \tau(\phi) \quad (1)$$

umschrieben werden, wobei $\tau(\phi)$ Transmissionen in der Grenzfläche Luft-Glas am Fluoreszenzlichtleiter FL2 als Funktion von $\phi$ darstellt. Der Winkel $\phi$ ist somit abhängig vom Abstand a, wobei folgende mathematische Beziehung gilt:

$$a = \frac{R}{\tan \phi} \rightarrow I_2 \sim \tau(a) \qquad (2)$$

R stellt hier den Radius des Fluoreszenzlichtleiters FL1 dar und $\tau(a)$ die Transmission als Funktion der Entfernung a. Zur Steigerung der Meßgenauigkeit und zur Erweiterung des Meßbereichs ist es hier selbstverständlich möglich, auch eine größere Anzahl von Fluoreszenzlichtleitern rotationssymmetrisch um die Lichtachse herumzulegen, womit dann mehrere Lichtströme quantitativ ausgewertet werden können und der Bereich der möglichen Einfallswinkel vergrößert wird.

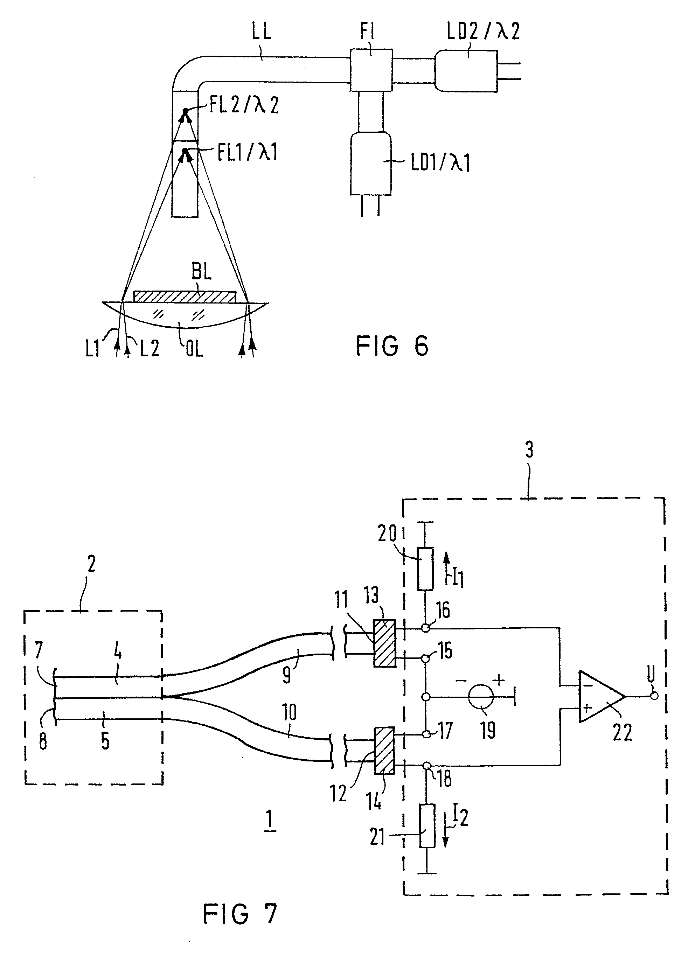

Eine Signalverarbeitung der mit den Fotoelementen LD1 und LD2 detektierten Fotoströme und der hierzu äquivalenten elektrischen Spannungen $U_1$ und $U_2$ kann in einfacher Weise durchgeführt werden, indem eine Quotientenbildung $U_2/U_1$ durchgeführt wird, um vom Reflexionsfaktor der Oberfläche des Prüfobjekts PQ unabhängig zu werden. Der nichtlineare Zusammenhang zwischen dem Abstand a und der Größe $U_2/U_1$ kann beispielsweise in Form von Listen abgespeichert sein und in die endgültige Auswertung eingehen. Ein detailliertes Ausführungsbeispiel für eine solche Auswerteeinrichtung ist anhand der Figur 7 beschrieben.

Bei dem anhand der Figur 4 dargestellten Ausführungsbeispiel der erfindungsgemäßen Einrichtung ist zusätzlich im Lichtweg eine optische Linse OL angebracht, die mit einer Blende BL versehen ist. Durch diese Linse kann eine Änderung des Einfallswinkels des reflektierten Lichts L derart hervorgerufen werden,

3

daß auch andere Formen der Anordnung der Fluoreszenzlichtleiter FL1 und FL2 möglich wären; im gezeigten Ausführungsbeispiel können sie auch mit gleichen Durchmessern übereinander angeordnet werden. Mit der zusätzlichen Blende, die den Bereich zwischen dem von der Lichtquelle LQ kommenden Lichtstrahl L und den reflektierten Lichtstrahlen L abschattet, kann eine Ausblendung von störenden Reflexionen aufgrund von Oberflächenunregelmäßigkeiten auf dem Prüfobjekt PO als Fehlerquelle weitgehend eliminiert werden.

Bei dem in der Figur 5 gezeigten dritten Ausführungsbeispiel ist der Lichtsensor dahingehend variiert, daß zwei Fluoreszenzlichtleiter mit Fluoreszenzlicht unterschiedlicher oder gleicher Wellenlänge in dem Bereich der möglichen Brennpunkte der optischen Linse OL angeordnet sind. Um eine störende Beeinflussung der beiden Fluoreszenzlichtleiter FL1 und FL2 zu verhindern, sind die beiden durch ein Sperrfilter SF voneinander getrennt. Die hier nicht mehr dargestellte Lichtquelle LQ erzeugt wie bei den vorhergehenden Ausführungsbeispielen reflektierende Lichtstrahlen L1 bzw. L2, unabhängig vom Abstand der Oberfläche des Prüfobjekts von dem Lichtsensor. Diese in unterschiedlichen Winkeln auf die optische Linse treffenden Lichtstrahlen L1 und L2 wandern somit in ihrem Brennpunkt auch zwischen den beiden Fluoreszenzlichtleitern FL1 und FL2, so daß auch hier aus dem Verhältnis des erzeugten Fluoreszenzlichts der Abstand des Prüfobjekts vom Lichtsensor hergeleitet werden kann.

In der Figur 6 ist eine weitere Variante des Ausführungsbeispiels nach der Figur 5 gezeigt, bei der zwei Fluoreszenzlichtleiterabschnitte FL1 mit der Wellenlänge $\lambda 1$ bzw. FL2 mit der Wellenlänge $\lambda 2$ des Fluoreszenzlichtes an einen Lichtleiter LL gekoppelt sind und somit die in gleicher Weise wie beim Ausführungsbeispiel nach der Figur 5 detektierten unterschiedlichen Fluoreszenzlichtmengen über ein Filter FI aufgespalten und auf die Fotoelemente LD1 und LD2 geleitet werden.

Eine Einrichtung 1 mit einem Lichtsensor 2 und einer elektrischen Auswerteeinrichtung 3 ist in der Figur 7 dargestellt.

Der Lichtsensor 2 besteht aus zwei Fluoreszenzlichtleitern 4 und 5 (entsprechend FL1, FL2), die hier nur verkürzt dargestellt sind. Die Fluoreszenzlichtleiter 4 bzw. 5 erhalten die von einer Einrichtung, wie beispielsweise das vorhergehende Ausführungsbeispiel, erzeugten Fluoreszenzlichtmengen über Stirnseiten 7 und 8. An den von den Stirnseiten 7 und 8 abgewandten Enden können sich beispielsweise auch die Fluoreszenzlichtleiter 4 und 5 in Lichtleiterstücke 9 und 10 fortsetzen. An den freien Stirnseiten 11 bzw. 12 der Lichtleiterstücke 9 und 10 sind als Fotoelemente LD1, LD2 jeweils eine Fotodiode 13 bzw. 14 angebracht. Die Fotodiode 13 besitzt zwei Anschlüsse 15 und 16, wobei mit 15 die Anode der Fotodiode 13 bezeichnet ist. Die Fotodiode 14 besitzt ebenfalls zwei Anschlüsse 17 und 18, wobei mit 15 die Anode der Fotodiode 13 bezeichnet ist. Die Fotodiode 14 besitzt ebenfalls zwei Anschlüsse 17 und 18, wobei hier mit 17 die Anode der Fotodiode 14 bezeichnet ist. Die Anschlüsse 15 bis 18 der Fotodioden 13 und 14 sind mit der elektrischen Auswerteeinrichtung 3 verbunden.

Die Auswerteeinrichtung 3 enthält eine Stromquelle 19, zwei Widerstände 20 und 21 und einen Differenzverstärker 22. Die Anschlüsse 15 und 17 der Fotodioden 13 und 14 sind miteinander und mit dem Minuspol der Stromquelle 19 verbunden. An den Anschlüssen 16 und 18 der Fotodioden 13 und 14 ist jeweils der Widerstand 20 bzw. 21 angeschlossen, dessen anderes Ende auf Massepotential liegt. Weiterhin sind die Anschlüsse 16 und 18 mit den Eingängen des Differenzverstärkers 22 verbunden, an dessen Ausgang eine Spannung U abgreifbar ist.

Die elektrische Auswerteeinrichtung 3 kann räumlich weit entfernt vom Lichtsensor 2 liegen.

Im folgenden sei die Wirkungsweise der Einrichtung 1 erläutert. Ein auf den Lichtsensor 2 fallender Lichtstrahl regt in den Fluoreszenzlichtleitern 4 und 5 die fluoreszierenden Substanzen zur Fluoreszenz an. Die Intensität des Fluoreszenzlichtes in den Fluoreszenzlichtleitern 4 und 5 hängt von der Verteilung des Lichts auf die beiden Fluoreszenzlichtleiter 4 und 5 ab. Das jeweilige Fluoreszenzlicht wird zu den Lichtleiterstücken 9 bzw. 10 und über diese durch Totalreflexion zu den Fotodioden 13 und 14 geführt. Die Intensität der durch die Fotodioden 13 bzw. 14 fließenden Ströme $I_1$ bzw. $I_2$ entspricht der Verteilung des Lichts auf die beiden Fluoreszenzlichtleiter 4 und 5 und damit Ort auf dem Lichtsensor 2. Aus der Differenz der Spannungen an den Widerständen 20 und 21, die von den Strömen $I_1$ bzw. $I_2$ hervorgerufen werden, wird mittels des Differenzverstärkers 22 die Spannung U ermittelt, aus der die zu erfassenden Meßgröße, wei anhand des vorhergehenden Ausführungsbeispiels beschrieben, herleitbar ist.

**Ansprüche**

1. Einrichtung zur Auswertung der Lage und Intensität eines Lichtflecks auf mindestens einem Lichtsensor (2) mit mindestens zwei elektrischen Fotoelementen (13,14;LD1,LD2), deren elektrische Anschlüsse an eine elektrische Auswerteeinrichtung (3) zur Gewinnung eines elektrischen Signals angeschlossen sind, dessen Größe ein Maß für die Lage und die Intensität des Lichtflecks ist, **dadurch gekennzeichnet,**
- daß der Lichtsensor mindestens zwei Fluoreszenzlichtleiter (4, 5; FL1, FL2) enthält, die im möglichen örtlichen Empfangsbereich des Lichtes (L; L1, L2) angeordnet sind,
- und daß jedes der mindestens zwei Fotoelemente (13, 14; LD1, LD2) mit jeweils einem der Fluoreszenzlichtleiter (4, 5; FL1, FL2) optisch verbunden ist.

2. Einrichtung nach Anspruch 1, **dadurch gekennzeichnet,**
- daß die Fluoreszenzlichtleiter (FL1, FL2) zur Einfallsrichtung des Lichts (L; L1, L2) derartig zueinander angeordnet sind, daß aus dem Verhältnis der jeweils detektierten Lichtmengen der Einfallswinkel des Lichtes (L; L1, L2) herleitbar ist.

3. Einrichtung nach Anspruch 1 oder 2, **dadurch gekennzeichnet,**
- daß die Fluoreszenzlichtleiter jeweils ein Fluoreszenzlicht gleicher Wellenlänge erzeugen.

4. Einrichtung nach Anspruch 1 oder 2, **dadurch gekennzeichnet,**
- daß die Fluoreszenzlichtleiter jeweils ein Fluoreszenzlicht unterschiedlicher Wellenlänge ($\lambda 1$, $\lambda 2$) erzeugen.

5. Einrichtung nach Anspruch 4, **dadurch gekennzeichnet,**
- daß die Fluoreszenzlichtleiter (FL1, FL2) an einen gemeinsamen Lichtleiter (LL) optisch gekoppelt sind und eine optische Filtereinrichtung (Fl) vorhanden ist, die das Fluoreszenzlicht der unterschiedlichen Wellenlängen ($\lambda 1$, $\lambda 2$) jeweils einem separaten Fotoelement (LD1, LD2) zuführt.

6. Einrichtung nach einem der vorhergehenden Ansprüche, **dadurch gekennzeichnet,**
- daß zur Bestimmung des Abstandes (a) eines Prüfobjekts (PO) von dem detektierenden Lichtsensor das Prüfobjekt von einer Lichtquelle (LQ) beleuchtet ist und das reflektierte Licht (L; L1, L2) auf die in der Einfallsrichtung des reflektierten Lichts (L; L1, L2) ungefähr hintereinander angeordneten Fluoreszenzlichtleiter (FL1, FL2) fällt, wobei
  - sich der Einfallswinkel und der Einfallsbereich des reflektierten Lichts in Abhängigkeit vom Abstand (a) des Prüfobjekts (PO) vom Lichtsensor ändert bzw. sich das Verhältnis der Fluoreszenzlichtmengen in den Fluoreszenzlichtleitern (FL1, FL2) verschiebt,
- und daß zwei Fluoreszenzlichtleiter (FL1, FL2) rotationssymmetrisch um die Achse des Lichtstrahls (L) der Lichtquelle (LQ) gelegt sind.

7. Einrichtung nach Anspruch 6, **dadurch gekennzeichnet,**
- daß zwischen dem Prüfobjekt (PO) und dem Lichtsensor eine optische Linse (OL) mit einer Blende (BL) angeordnet ist, die den Bereich zwischen dem Lichtstrahl (L) von der Lichtquelle (LQ) und den reflektierten Lichtstrahlen (L) abschattet.

8. Einrichtung nach einem der Ansprüche 1 bis 5, **dadurch gekennzeichnet,**
- daß zur Bestimmung des Abstandes eines Prüfobjektes von dem detektierenden Lichtsensor das Prüfobjekt von einer Lichtquelle beleuchtet und eine optische Linse (OL) außerhalb des Bereichs der Lichtquelle und des Prüfobjekts in der Achse des Lichtstrahls angeordnet ist, die eine Blende (BL) aufweist, die nur für einen vorgegebenen Bereich der reflektierten Lichtstrahlen (L1, L2) vom Prüfobjekt durchlässig ist,
- und daß die reflektierten Lichtstrahlen (L1, L2) durch die optische Linse (OL) einen Brennpunkt im Bereich der stabförmig im Verlauf der optischen Achse angeordneten Fluoreszenzlichtleiter (FL1/ $\lambda 1$, FL2/ $\lambda 2$) haben, die für das Fluoreszenzlicht voneinander getrennte Bereiche haben.

9. Einrichtung nach Anspruch 8, **dadurch gekennzeichnet,**
- daß die Bereiche der Fluoreszenzlichtleiter (FL1, FL2) über ein Sperrfilter (SF) voneinander getrennt sind und jeder Fluoreszenzlichtleiter ein separates Fotoelement (LD1, LD2) aufweist.

10. Einrichtung nach Anspruch 8, **dadurch gekennzeichnet,**
- daß beide Bereiche optisch an einen Lichtleiter (LL) gekoppelt sind
- und daß ein Filter (F1) vorhanden ist, in dem das Fluoreszenzlicht unterschiedlicher Wellenlänge ($\lambda 1$, $\lambda 2$) aufgespalten und separat ausgewertet wird.

EP 0 229 307 B1

**Claims**

1. A device for evaluating the position and intensity of a light spot on at least one light sensor (2) having at least two electrical photoelements (13, 14, LD1, LD2), the electrical terminals of which are connected to an electrical evaluating device (3) for obtaining an electrical signal, the magnitude of which is a measure of the position and the intensity of the light spot, characterised

   - in that the light sensor includes at least two fluorescent light guides (4, 5; FL1, FL2), which are arranged in the possible local receiving region of the light (L; L1, L2), and
   - in that at least two photoelements (13, 14; LD1, LD2) are optically coupled respectively to respective fluorescent light guides (4, 5; FL1, FL2).

2. A device according to claim 1, characterised

   - in that the respective fluorescent light guides (FL1, FL2) are so arranged together according to the direction of incidence of the light (L;L1, L2) that from the ratio of the respective detected light quantities the angle of incidence of the light (L; L1, L2) can be deduced.

3. A device according to claim 1 or 2, characterised

   - in that the fluorescent light guides each generate fluorescent light of the same wavelength.

4. A device according to claim 1 or 2, characterised

   - in that the fluorescent light guides generate fluorescent light of different respective wavelengths ($\lambda 1, \lambda 2$).

5. A device according to claim 4, characterised

   - in that the fluorescent light guides (FL1, FL2) are optically coupled to a common light guide (LL) and an optical filter device (FI) is present, which device supplies the fluorescent light of the different respective wavelengths ($\lambda 1$, $\lambda 2$) to separate respective photoelements (LD1, LD2).

6. A device according to one of the preceding claims, characterised

   - in that for determining the distance (a) of a test object (PO) from the detected light sensor the test object is illuminated by a light source (LQ) and the reflected light (L; L1, L2) falls on the fluorescent light guides (FL1, FL2) arranged approximately one behind the other in the direction of incidence of the reflected light (L; L1, L2), whereby in dependence upon the distance (a) of the test object (PO) from the light sensor the angle of incidence and the region of incidence of the reflected light are changed, or more precisely the ratio of the fluorescent light quantities in the fluorescent light guides (FL1, FL2) is changed,
   - and in that two fluorescent light guides (FL1, FL2) are disposed in a rotationally symmetric manner around the axis of the light beam (L) of the light source (LQ).

7. A device according to claim 6, characterised

   - in that between the test object (PO) and the light sensor there is arranged an optical lens (OL) with a mask (BL) which shadows the region between the light beam (L) from the light source (LQ) and the reflected light beams (L).

8. A device according to one of claims 1 to 5, characterised

   - in that for determining the distance of a test object from the detected light sensor the test object is illuminated by a light source and on the axis of the light beam an optical lens (OL) is arranged, outside the region of the light source and the test object, the lens having a mask (BL) which is only permeable for a predetermined region of the reflected light beams (L1, L2) from the test object,
   - and in that the reflected light beams (L1, L2) passing through the optical lens (OL) have a focal point in the region of the rod-shaped fluorescent light guides (FL1/$\lambda 1$, FL2/$\lambda 2$) arranged along the optical axis, which guides have regions for the fluorescent light separated from each other.

9. A device according to claim 8, characterised in that

   - the regions of the fluorescent light guides (FL1, FL2) are separated from each other by way of a

6

blocking filter (SF) and each fluorescent light guide has a separate photoelement (LD1, LD2).

10. A device according to claim 8, characterised
    - in that both regions are coupled optically to the light guide (LL)
    - and in that a filter (F1) is present in which the fluorescent light of different wavelengths ($\lambda 1$, $\lambda 2$) is split up and evaluated separately.

**Revendications**

1. Dispositif pour évaluer la position et l'intensité d'un spot lumineux sur au moins un détecteur de lumière (2) comportant au moins deux éléments électriques photosensibles (13,14; LD1,LD2), dont les bornes électriques sont raccordées à une unité d'évaluation électrique (3) pour l'obtention d'un signal électrique, dont l'intensité est une mesure de la position et de l'intensité du spot lumineux, caractérisé par le fait
    - que le détecteur de lumière contient au moins deux guides de lumière de fluorescence (4,5; FL1,FL2), qui sont disposés dans la zone locale possible de réception de la lumière (L; L1,L2), et
    - que chacun des éléments photosensibles (13,14; LD1,LD2), prévus au moins au nombre de deux, est raccordé optiquement à l'un respectif des guides de lumière de fluorescence (4,5; FL1,FL2).

2. Dispositif suivant la revendication 1, caractérisé par le fait
    - que les guides de lumière de fluorescence (FL1,FL2) sont disposés l'un par rapport à l'autre, dans la direction d'incidence de la lumière (L;L1,L2) de telle sorte que l'angle d'incidence de la lumière (L;L1,L2) peut être tiré du rapport des quantités de lumière respectivement détectées.

3. Dispositif suivant la revendication 1 ou 2, caractérisé par le fait
    - que les guides de lumière de fluorescence produisent des lumières respectives de fluorescence possédant des longueurs d'onde identiques.

4. Dispositif suivant la revendication 1 ou 2, caractérisé par le fait
    - que les guides de lumière de fluorescence produisent des lumières respectives de fluorescence ayant des longueurs d'onde ($\lambda 1$,$\lambda 2$) différentes.

5. Dispositif suivant la revendication 4, caractérisé par le fait
    - que les guides de lumière de fluorescence (FL1,FL2) sont accouplés optiquement à un guide de lumière commun (LL1) et qu'il est prévu un dispositif de filtrage optique (FI), qui envoie les lumières de fluorescence possédant les longueurs d'onde ($\lambda 1$,$\lambda 2$) différentes, à des éléments photosensibles respectifs séparés (LD1,LD2).

6. Dispositif suivant l'une des revendications précédentes, caractérisé par le fait
    - que pour la détermination de la distance (a) entre un objet à contrôler (PO) et le détecteur de lumière réalisant la détection, l'objet à contrôler est éclairé par une source de lumière (LQ) et la lumière réfléchie (L;L1,L2) tombe sur les guides de lumière de fluorescence (FL1,FL2) disposés approximativement l'un derrière l'autre dans la direction d'incidence de la lumière réfléchie (L;L1,L2), auquel cas
        - l'angle d'incidence et la plage d'incidence de la lumière réfléchie varient en fonction de la distance (a) entre l'objet à contrôler (PO) et le détecteur de lumière, ou le rapport des quantités de lumière de fluorescence dans les guides de lumière de fluorescence (FL1,FL2) varie,
    - et que deux guides de lumière de fluorescence (FL1,FL2) sont disposés, avec une symétrie de révolution, autour de l'axe du faisceau de lumière (L) de la source de lumière (LQ).

7. Dispositif suivant la revendication 6, caractérisé par le fait
    - qu'entre l'objet à contrôler (PO) et le détecteur de lumière est installée une lentille optique (OL) comportant un écran (BL), qui occulte la zone située entre le faisceau de lumière (L) partant de la source de lumière (LQ) et les faisceaux de lumière réfléchis (L).

8. Dispositif suivant l'une des revendications 1 à 5, caractérisé par le fait

7

EP 0 229 307 B1

- que pour déterminer la distance entre un objet à contrôler et le détecteur de lumière réalisant la détection, l'objet à contrôler est éclairé par une source de lumière, et une lentille optique (OL) est disposée à l'extérieur de la zone de la source de lumière et de l'objet à contrôler, sur l'axe du faisceau de lumière, qui porte un écran (BL) qui est transparent uniquement pour une zone prédéterminée de passage des rayons lumineux réfléchis (L1,L2) par l'objet à contrôler, et
- que les faisceaux de lumière réfléchis (L1,L2) convergent, sous l'effet de la lentille optique (OL), en un foyer situé dans la région des guides de lumière de fluorescence (FL1/λ1, FL2/λ2), qui sont disposés sous la forme de tiges dans la direction de l'axe optique et possèdent des zones séparées l'une de l'autre pour la lumière de fluorescence.

9. Dispositif suivant la revendication 8, caractérisé par le fait
- que les parties des guides de lumière de fluorescence (FL1, FL2) sont séparées l'une de l'autre par un filtre de blocage (SF) et que chaque guide de lumière de fluorescence possède un élément photosensible séparé (LD1,LD2).

10. Dispositif suivant la revendication 8, caractérisé par le fait
- que les deux parties sont couplées optiquement à un guide de lumière (LL), et
- qu'il est prévu un filtre (F1), dans lequel les lumières de fluorescence possédant des longueurs d'ondes (λ1, λ2) différentes sont séparées et évaluées séparément.

FIG 1

FIG 2

FIG 4

FIG 5

FIG 3

LL   FI   LD2/λ2

FL2/λ2

FL1/λ1

LD1/λ1

BL

L1  L2  OL   FIG 6

FIG 7